# EUROPEAN PATENT APPLICATION

(11) **EP 4 786 791 A1**
(43) Date of publication of application: **05.08.2026**
(21) Application number: 26154720.2
(22) Date of filing: 28.01.2026
(51) Int. Cl.: F04D 17/10, F04D 29/44

(54) **CENTRIFUGAL COMPRESSOR DIFFUSER**

(30) Priority: 29.01.2025 US 202519040052
(71) Applicant: Pratt & Whitney Canada Corp., (01BE5) Longueuil, QC J4G 1A1 (CA)
(72) Inventor: LANDRY-DROLET, Guillaume, (01BE5) Longueuil, J4G 1A1 (CA); NICHOLS, Jason, (01BE5) Longueuil, J4G 1A1 (CA)
(74) Representative: Dehns

(57) **Abstract**

A centrifugal compressor includes an impeller (18a) rotatable about a central axis (26), and a scroll housing (28) enclosing the impeller (18a). The scroll housing (28) includes a housing inlet (30) configured to direct an airflow (32) to the impeller (18a) for compression, and a scroll (36) positioned downstream of an impeller outlet (46). The scroll (36) is configured to direct a compressed airflow (32) toward a housing outlet (34). A plurality of diffuser pipes (38) are positioned in the scroll housing (28) and are configured to direct the compressed airflow (32) from the impeller outlet (46), through the plurality of diffuser pipes (38) and into the scroll (36). An aerodynamic sleeve (48) encloses at least one diffuser pipe (38; 38a, 38b) of the plurality of diffuser pipes (38).

## Description

### TECHNICAL FIELD

Exemplary embodiments pertain to the art of gas turbine engines, and in particular to centrifugal compressors of gas turbine engines.

### BACKGROUND

Centrifugal compressors are widely used in aerospace and industrial applications. Impellers of such centrifugal compressors can generate large increases in the total pressure by way of radius change from the inlet to the exit. A diffuser of the compressor is utilized to convert kinetic energy, or flow velocity from the impeller to potential energy in the form of static pressure.

A scroll or volute is used to collect flow downstream of a centrifugal compressor and exhaust it into a pipe or duct. Vaned or vaneless diffusers are commonly used to reduce the flow velocity prior to entry into the scroll. Another type of diffuser is the fishtail or pipe diffuser which can also be used within a scroll. Such diffusers, however, typically have significant pressure losses associated with them. The art would welcome a configuration that reduces the pressure losses, thereby improving the performance of the diffuser.

### BRIEF DESCRIPTION

In an aspect of the present invention, a centrifugal compressor includes an impeller rotatable about a central axis, and a scroll housing enclosing the impeller. The scroll housing includes a housing inlet configured to direct an airflow to the impeller for compression, and a scroll positioned downstream of an impeller outlet. The scroll is configured to direct a compressed airflow toward a housing outlet. A plurality of diffuser pipes are positioned in the scroll housing and are configured to direct the compressed airflow from the impeller outlet, through the plurality of diffuser pipes and into the scroll. An aerodynamic sleeve encloses at least one diffuser pipe of the plurality of diffuser pipes.

In an embodiment of the above, the aerodynamic sleeve has one of a teardrop cross-sectional shape, an airfoil cross-sectional shape, or an elliptical cross-sectional shape.

In an embodiment according to any of the previous embodiments, the aerodynamic sleeve contacts at least one diffuser pipe.

In an embodiment according to any of the previous embodiments, the aerodynamic sleeve is secured to the at least one diffuser pipe.

In an embodiment according to any of the previous embodiments, the aerodynamic sleeve encloses two or more circumferentially adjacent diffuser pipes of the plurality of diffuser pipes.

In an embodiment according to any of the previous embodiments, the aerodynamic sleeve has one of an undulating or tapering cross-sectional shape between two diffuser pipes of the two or more circumferentially adjacent diffuser pipes.

In an embodiment according to any of the previous embodiments, the aerodynamic sleeve is a circumferentially continuous structure enclosing the entirety of the plurality of diffuser pipes.

In another aspect of the present invention, a housing assembly of a centrifugal compressor includes a housing inlet configured to direct an airflow to an impeller of the centrifugal compressor for compression, and a scroll positioned downstream of an impeller outlet of the impeller. The scroll is configured to direct a compressed airflow toward a housing outlet. A plurality of diffuser pipes are configured to direct the compressed airflow from the impeller outlet, through the plurality of diffuser pipes and into the scroll. An aerodynamic sleeve encloses at least one diffuser pipe of the plurality of diffuser pipes.

In an embodiment of the above, the aerodynamic sleeve has one of a teardrop cross-sectional shape, an airfoil cross-sectional shape, or an elliptical cross-sectional shape.

In an embodiment according to any of the previous embodiments, the aerodynamic sleeve contacts the at least one diffuser pipe.

In an embodiment according to any of the previous embodiments, the aerodynamic sleeve is secured to at least one diffuser pipe.

In an embodiment according to any of the previous embodiments, the aerodynamic sleeve encloses two or more circumferentially adjacent diffuser pipes of the plurality of diffuser pipes.

In an embodiment according to any of the previous embodiments, the aerodynamic sleeve has one of an undulating or tapering cross-sectional shape between two diffuser pipes of the two or more circumferentially adjacent diffuser pipes.

In an embodiment according to any of the previous embodiments, the aerodynamic sleeve is a circumferentially continuous structure enclosing the entirety of the plurality of diffuser pipes.

In yet another aspect of the present invention, a gas turbine engine includes a turbine, a combustor operably connected to the turbine to drive rotation of the turbine via operation of the combustor, and a compressor section configured to compress an airflow and direct the compressed airflow to the combustor. The compressor section includes at least one centrifugal compressor including an impeller rotatable about a central axis, and a scroll housing enclosing the impeller. The scroll housing includes a housing inlet configured to direct an airflow to the impeller for compression, and a scroll positioned downstream of an impeller outlet. The scroll is configured to direct a compressed airflow toward a housing outlet. A plurality of diffuser pipes are positioned in the compressor housing and are configured to direct the compressed airflow from the impeller outlet, through the plurality of diffuser pipes and into the scroll. An aerodynamic sleeve encloses at least one diffuser pipe of the plurality of diffuser pipes.

In an embodiment of the above, the aerodynamic sleeve has one of a teardrop cross-sectional shape, an airfoil cross-sectional shape, or an elliptical cross-sectional shape.

In an embodiment according to any of the previous embodiments, the aerodynamic sleeve is secured to the at least one diffuser pipe.

In an embodiment according to any of the previous embodiments, the aerodynamic sleeve encloses two or more circumferentially adjacent diffuser pipes of the plurality of diffuser pipes.

In an embodiment according to any of the previous embodiments, the aerodynamic sleeve has one of an undulating or tapering cross-sectional shape between two diffuser pipes of the two or more circumferentially adjacent diffuser pipes.

In an embodiment according to any of the previous embodiments, the aerodynamic sleeve is a circumferentially continuous structure enclosing the entirety of the plurality of diffuser pipes.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a partial cross-sectional view of an embodiment of a compressor stage of a gas turbine engine;
FIG. 3 is a cross-sectional view of an embodiment of a compressor scroll with a plurality of diffuser pipes;
FIG. 4 is a cross-sectional view of an embodiment of a diffuser pipe having a sleeve installed thereto;
FIG. 5 is a cross-sectional view of another embodiment of a diffuser pipe and sleeve arrangement;
FIG. 6 is a cross-sectional view of yet another embodiment of a diffuser pipe and sleeve arrangement; and
FIG. 7 is a cross-sectional view of still another embodiment of a diffuser pipe and sleeve arrangement.

### DETAILED DESCRIPTION

A detailed description of one or more embodiments of the disclosed apparatus and method are presented herein by way of exemplification and not limitation with reference to the Figures.

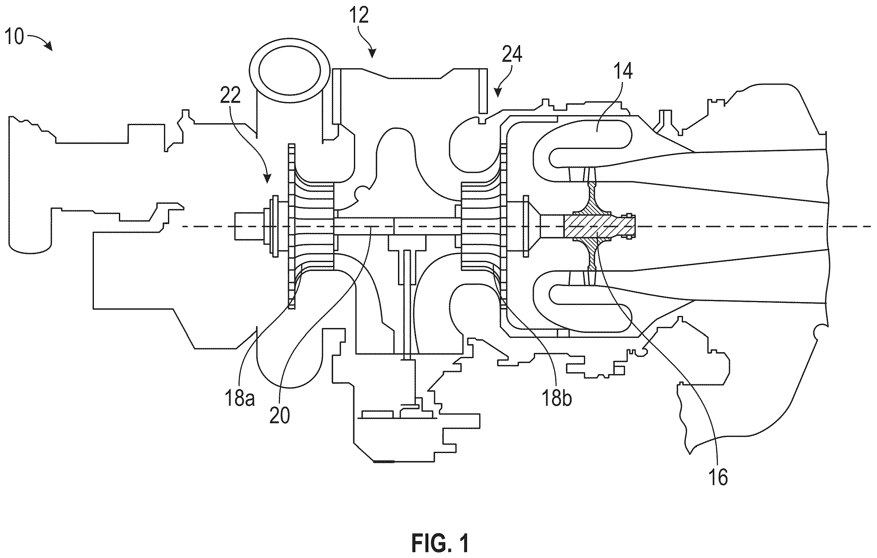

FIG. 1 illustrates an embodiment of a gas turbine engine 10, for example and auxiliary power unit (APU) of an aircraft. The gas turbine engine 10 generally includes a compressor section 12 for pressurizing a flow of air, a combustor 14 in which the compressed air is mixed with fuel and ignited for generating an annular stream of hot combustion gases, and a turbine section 16 for extracting energy from the combustion gases.

The compressor section 12 illustrated includes a core impeller 18b configured to deliver airflow to the combustor section 14, and a load impeller 18a driven by the turbine section 16 to deliver a compressed airflow to other aircraft systems, such as for customer bleed and main engine start.

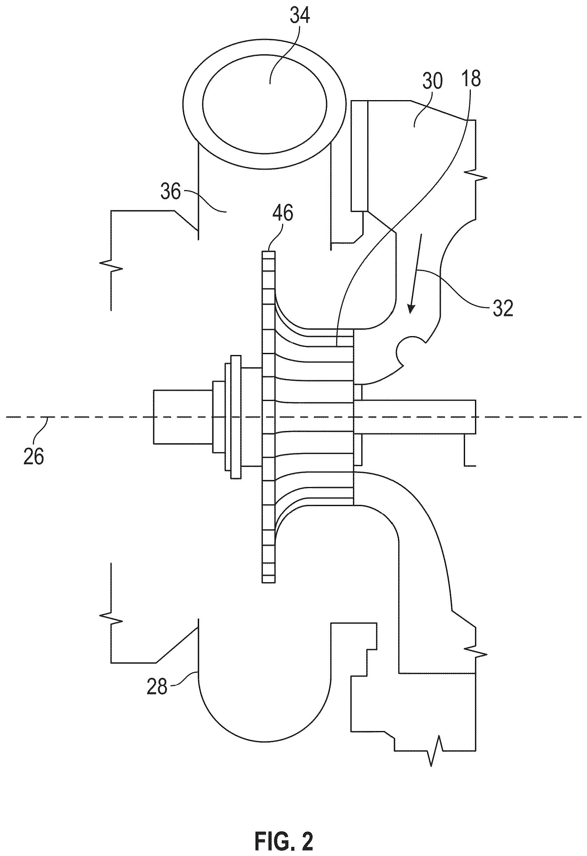

Referring now to FIG. 2, an exemplary compressor stage is illustrated. The compressor stage includes the load impeller 18a, which rotates about a central axis 26, and is enclosed in a scroll housing 28. The scroll housing 28 includes a compressor inlet 30 to direct airflow 32 toward the load impeller 18a for compression, and a compressor outlet 34 to direct the compressed airflow 32 out of the scroll housing 28. The scroll housing 28 defines a scroll 36 or volute between the load impeller 18a and the compressor outlet 34 in which the compressed airflow 32 is collected and directed toward the compressor outlet 34.

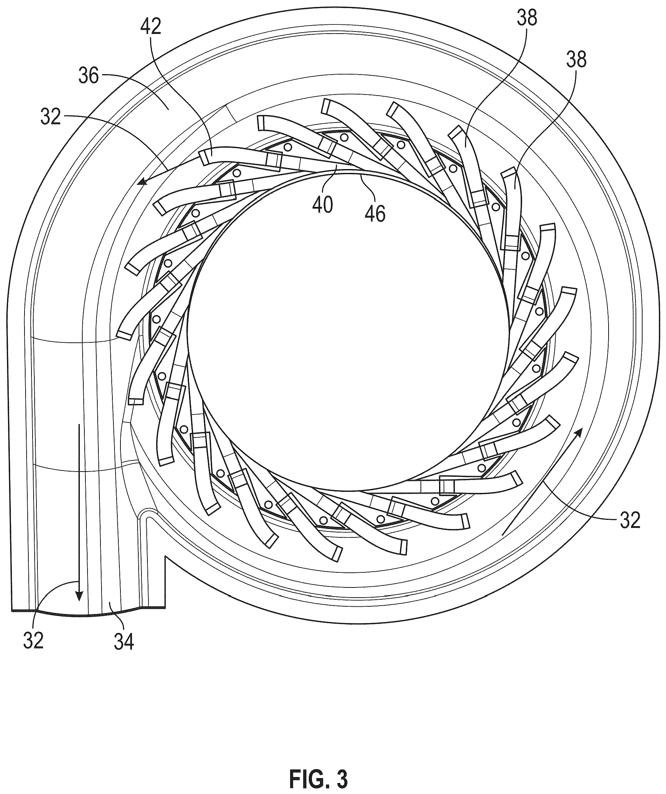

Referring now to FIG. 3, an exemplary embodiment of a scroll 36 and compressor outlet 34 is cross-sectionally illustrated. A plurality of diffuser pipes 38 are disposed in the scroll 36. The diffuser pipes 38 are hollow members circumferentially spaced around the scroll 36. Each diffuser pipe 38 has a pipe inlet 40 and a pipe outlet 42 located radially outboard of the pipe inlet 40. In some embodiments, the pipe outlet 42 is not only radially outboard of the pipe inlet 40, but is circumferentially offset from the pipe inlet 40 in a direction generally with the direction of airflow 32 along the scroll 36 toward the compressor outlet 34.

The compressed airflow 32 from an impeller outlet 46 is directed into the pipe inlets 40 of the diffuser pipes 38 and exits the pipe outlets 42 into the scroll 36, and then flows circumferentially around the scroll 36 toward the compressor outlet 34. In this circumferential flow of the airflow 32 around the scroll 36, the airflow 32 incidentally flows across and/or around other diffuser pipes 38 of before exiting via the compressor outlet 34. This typically introduces losses in the performance of the compressor stage.

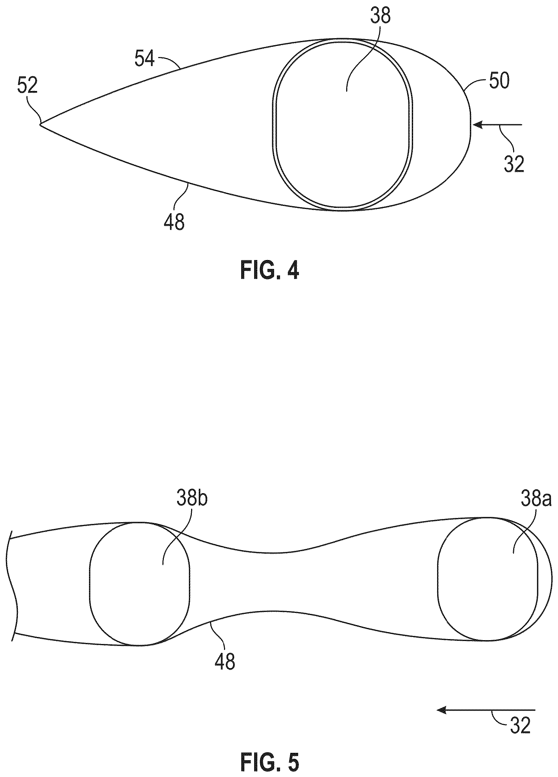

Referring now to FIG. 4, to reduce these losses, the diffuser pipes 38 may be enclosed in individual aerodynamic sleeves 48. The diffuser pipe 38 is configured with, for example, a circular, elliptical, or oval cross-sectional shape, as shown. One skilled in the art will readily appreciate that these shapes are merely exemplary, however, and the diffuser pipe 38 may be another cross-sectional shape to provide selected properties of the flow of air therethough, such as pressure and flow rate, for example. An embodiment of a sleeve 48 surrounds diffuser pipe 38, and in some embodiments may contact the diffuser pipe 38 at one or more locations. Additionally, the sleeve 48 may be secured to the diffuser pipe 38 at one or more of the contact locations via, for example, brazing or welding. The sleeve 48 has a different cross-sectional shape that the diffuser pipe 38 it surrounds, and may in some embodiments be hollow, or alternatively may be a substantially filled element. In the illustrated embodiment, the sleeve 48 has a teardrop cross-sectional shape with a rounded first end 50, a pointed second end 52 opposite the first end 50, and a sleeve body 54 extending between the first end 50 and the second end 52. In the embodiment illustrated in FIG. 4, the first end 50 is positioned facing the airflow direction 32, upstream of the second end 52 relative to the airflow direction 32. While the sleeve 48 in the illustrated embodiment has a teardrop-shaped cross-section, on skilled in the art will readily appreciate that in other embodiments the sleeve 48 may have another cross-sectional shape, such as an airfoil shape or an elliptical shape. While the sleeve 48 illustrated is FIG. 4 is symmetrical, in other embodiment, the cross-sectional shape may be asymmetric. The sleeve 48 acts to reduce turbulent flow in the scroll 36 and improve performance of the compressor stage.

Referring now to FIG. 5, in another embodiment, the sleeve 48 may not surround only one diffuser pipe 38, but may surround two or more diffuser pipes 38, such as upstream diffuser pipe 38a and downstream diffuser pipe 38b, which is circumferentially adjacent to the upstream diffuser pipe 38a. In the embodiment of FIG. 5, the cross-sectional shape of the sleeve 48 between adjacent diffuser pipes 38a and 38b is undulating, and tapers downstream of diffuser pipe 38a before widening to pass over the diffuser pipe 38b. The bridging of the sleeve 48 across multiple diffuser pipes 38 allows for securing the sleeve 48 to the multiple diffuser pipes 38 thus increasing a rigidity of the assembly.

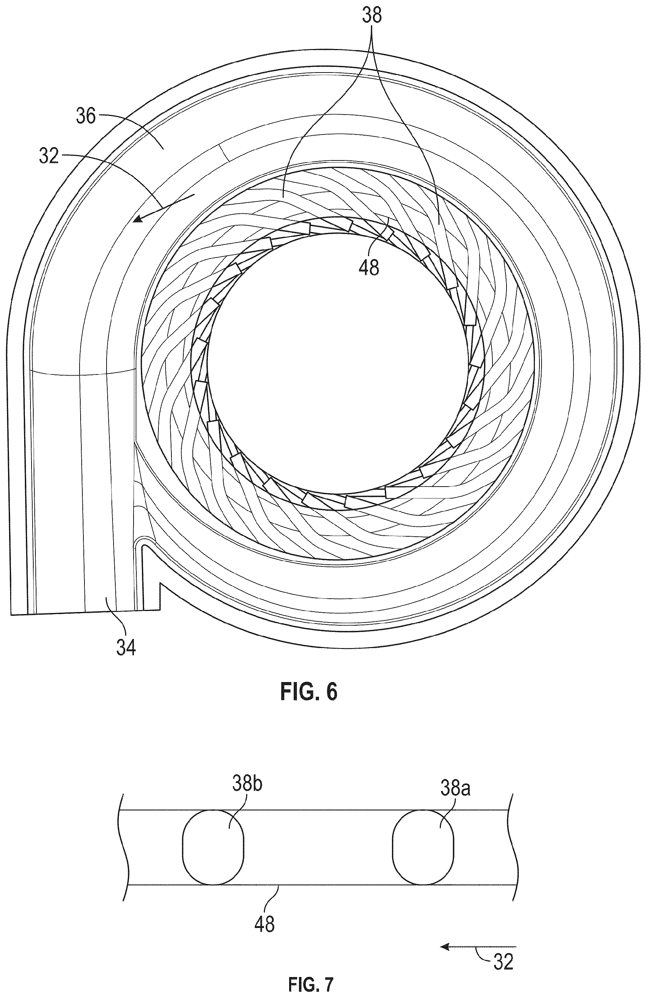

In another alternative embodiment, as illustrated in FIG. 6, the sleeve 48 extends continuously circumferentially around the scroll 36 enclosing all of the diffuser pipes 38. In some embodiments, such as illustrated in FIG. 7, this continuous sleeve 48 extends directly linearly between adjacent diffuser pipes 38. In other embodiments, this continuous sleeve 48 may have an undulating cross-sectional shape as the embodiment of FIG. 5, or may have an alternative shape to provide desired airflow properties at the compressor outlet 34. In this embodiment, the plurality of diffuser pipes 38 and the sleeve 48 define an enclosed body and may be formed via, for example, casting, machining, additive manufacturing, or other methods. In this configuration, the airflow exiting each of the diffuser pipes 38 does not interact with any of the adjacent diffuser pipes 38 as it flows through the scroll 36 toward the compressor exit 34.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A housing assembly for a centrifugal compressor, comprising:
a housing inlet (30) configured to direct an airflow (32) to an impeller (18a) of the centrifugal compressor for compression;
a scroll (36) configured to be disposed downstream of an impeller outlet (46) of the impeller (18a), the scroll (36) configured to direct a compressed airflow (32) toward a housing outlet (34);
a plurality of diffuser pipes (38) configured to direct the compressed airflow (32) from the impeller outlet (46), through the plurality of diffuser pipes (38) and into the scroll (36); and
an aerodynamic sleeve (48) enclosing at least one diffuser pipe (38; 38a, 38b) of the plurality of diffuser pipes (38).

2. The housing assembly of claim 1, wherein the aerodynamic sleeve (48) has a teardrop cross-sectional shape.

3. The housing assembly of claim 1, wherein the aerodynamic sleeve (48) has an airfoil cross-sectional shape.

4. The housing assembly of claim 1, wherein the aerodynamic sleeve (48) has an elliptical cross-sectional shape.

5. The housing assembly of any preceding claim, wherein the aerodynamic sleeve (48) contacts the at least one diffuser pipe (38; 38a, 38b).

6. The housing assembly of any preceding claim, wherein the aerodynamic sleeve (48) is secured to at least one diffuser pipe (38; 38a, 38b).

7. The housing assembly of any preceding claim, wherein the aerodynamic sleeve (48) encloses two or more circumferentially adjacent diffuser pipes (38a, 38b) of the plurality of diffuser pipes (38).

8. The housing assembly of claim 7, wherein the aerodynamic sleeve (48) has an undulating cross-sectional shape between two diffuser pipes (38a, 38b) of the two or more circumferentially adjacent diffuser pipes (38a, 38b).

9. The housing assembly of claim 7 or 8, wherein the aerodynamic sleeve (48) has a tapering cross-sectional shape between two diffuser pipes (38a, 38b) of the two or more circumferentially adjacent diffuser pipes (38a, 38b).

10. The housing assembly of any preceding claim, wherein the aerodynamic sleeve (48) is a circumferentially continuous structure enclosing the entirety of the plurality of diffuser pipes (38).

11. A centrifugal compressor, comprising:
an impeller (18a) rotatable about a central axis (26); and
a scroll housing (28) according to the housing assembly of any preceding claim enclosing the impeller (18a).

12. A gas turbine engine (10), comprising:
a turbine (16);
a combustor (14) operably connected to the turbine (16) to drive rotation of the turbine (16) via operation of the combustor (14);
a compressor section (12) configured to compress an airflow (32) and direct the compressed airflow (32) to the combustor (14), the compressor section (12) including at least one centrifugal compressor according to claim 11.
